# EUROPEAN PATENT APPLICATION

(11) **EP 1 811 779 A1**
(43) Date of publication of application: **25.07.2007**
(21) Application number: 06025886.0
(22) Date of filing: 24.05.2002
(51) Int. Cl.: H04N 7/173

(54) **A method and a system for managing audio-visual contents for the distribution thereof in the on-demand mode**

(62) Divisional of application: 02754584.7
(71) Applicant: Oikos Anstalt, Vaduz (LI)
(72) Inventor: Contarino, Rosario, D., London SW13 8HL (GB)
(74) Representative: Zardi, Marco

(57) **Abstract**

It is described a method for managing audio-visual contents characterized in that it comprises the steps of:
- realizing a peer-to-peer network of a plurality of router devices suitable for connection to external data networks and comprising audio-visual content storage means;
- providing a plurality of player devices connected to corresponding router devices, as well as to a display device of said final user;
- providing at least one shared section of said audio-visual content storage means;
- sharing said shared sections of said audio-visual content storage means of said router devices; and
- distributing audio-visual contents on said storage means of said plurality of router devices.

It is also described a managing system comprising at least a first router device (11) connected to a digital network (13) for transmitting audio-visual contents as well as to a second player device (12) connected in turn to at least one device (15) for displaying audio-visual contents installed with a final user suitable to implement the managing method according to the invention.

## Description

### Technical Field

The present invention relates to a method and a system for managing audio-visual contents for the distribution thereof in the on-demand mode.

The invention relates particularly, but non exclusively, to a method and a system for managing television contents being available on external data networks and to be distributed in the on-demand mode to a plurality of final users which subscribed to the service and the following description is given with reference to this field of application for convenience of illustration only.

### Background Art

As it is well known, the increasing diffusion of digital networks, both terrestrial and satellite and wireless, which can be used for the physical transmission of audio-visual contents, now allows a change of the traditional television equipment toward the so-called on-demand mode for the final residential users.

In particular, differently from a common television set wherein the audio-visual content transmission, once a channel chosen, occurs according to the TV programs imposed by the TV broadcaster, the transmission of audio-visual content according to the on-demand mode must allow a particular audio-visual content to be available, whether it is an entertainment program, a news or other program, only on explicit demand of the user and only when this request is made.

It should be noted that the delivery of audio-visual contents on digital networks requires however a considerable transmission capacity of the networks themselves.

This is one of the main reasons, besides the not-widespread diffusion of these networks on the national territories, limiting at present the market of the on-demand transmission of audio-visual contents.

On the other hand, this transmission mode is considered unanimously the key instrument just for a real diffusion of the broadband networks. In fact, if the on-demand transmission service is not available, telephone companies, which possess the present networks and which are the only responsible for the diffusion thereof, are considerably restrained in the development of the widespread distribution of the connections to digital networks, which have been up to now little attractive from the commercial and the final residential users point of view.

Without a real extension of broadband connections, the companies involved in offering on-demand video services are at present strictly linked to telephone companies and they did not invest considerably in research and development to be able to offer sophisticated products to the wider market, the so-called consumer market, addressing mainly to specific markets and to the business market.

The products which are presently available on the market suitable for offering on-demand audio-visual contents require however a broadband connection and they are strictly dependent on the quality and transmission capacity of the connection being available together with the device offered for receiving and viewing audio-visual contents.

In particular, these products are all based on a centralized processing model. All the audio-visual contents are therefore resident on one or more central servers connected to the digital networks and, upon each peripheral user demand, they start the delivery in real time of the audio-visual content.

The highest number of users simultaneously active in viewing broadband audio-visual contents is therefore limited by the maximum capacity of each server multiplied by the number of servers being connected.

At present, the most important telephone companies existing on the world market can offer their services at a number of users simultaneously connected not exceeding 50,000 (on the US market) and 20,000 (on the European market). It should be pointed out that such a number of users is certainly lower by some orders of magnitude than the traditional television market.

Moreover, the centralized management of the audio-visual content transmission has serious implications on the use of the band offered by telephone companies.

The connections used follow in fact a star pattern, from the exchange station connecting the main servers wherein the audio-visual contents are stored, to the periphery, where each connection reaches the single equipment of the final users, i.e. the subscribers to the service.

This kind of connection, linked to the kind of interaction between the peripheral devices installed with the final users and the central servers, provides that the connections near the central servers are always overloaded by transmissions, since all the data go through the central servers while the peripheral connections or branches, for example between a commune and the quarters thereof or between a quarter and the blocks thereof, are almost underused since they must only support the transit of the data sent to the few users simultaneously connected to that particular peripheral branch.

Moreover the quantity of programs which are available to the final user in terms of programming hours depends on the storage capacity of the servers offered by the company managing the on-demand video service.

At present, all the main operators can provide an audio-visual content volume varying from 100 and 200 programming hours. These audio-visual contents are usually renewed one per month.

Finally it should be noted that, given the kind of technology developed and installed with the final user, each user can receive only one television program a time, according to a reality being very far from the real condition of a west average family which can have more than one television set per house.

In fact, the devices which are presently installed with the customers do not have a high processing capacity and they are limited to receiving the signal sent by the central system.

The technical problem underlying the present invention is to provide a method for managing audio-visual contents on digital networks and a corresponding system for managing these audio-visual contents with the final users, having such structural and functional characteristics as to allow an on-demand mode distribution upon request of the final user overcoming the limitations and drawbacks which still limit the on-demand video services realized according to the prior art.

### Disclosure of Invention

The solutive idea underlying the present invention is to distribute the audio-visual contents on a plurality of storage means of devices connected through a peer-to-peer network so to allow an audio-visual content selected by a final user to be collected and displayed in the equipment of that user.

Based on this solutive idea the technical problem is solved by a method for managing audio-visual contents as previously described and defined in the characterizing part of claim 1.

The problem is also solved by a system for managing audio-visual contents as previously described and defined in the characterizing part of claim 15.

The features and advantages of the method and system for managing audio-visual contents according to the invention will be apparent from the following description of an embodiment thereof given by way of non-limiting example with reference to the attached drawings.

### Brief Description of Drawings

In the drawings:
Figure 1 schematically shows a system for managing audio-visual contents which is suitable for implementing the method for managing audio-visual contents according to the invention;
Figure 2 schematically shows a detail of the system of Figure 1; and
Figure 3 schematically shows a further detail of the system of Figure 1.

### Modes for Carrying Out the Invention

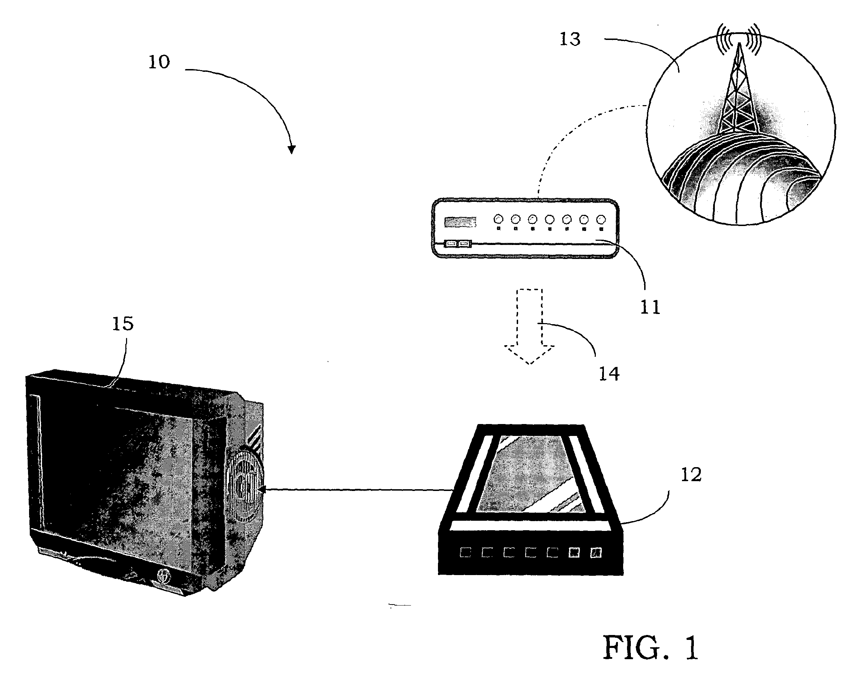

With reference to the drawings, and particularly to Figure 1, a system for managing audio-visual contents according to the invention is globally and schematically indicated with 10.

In particular, the managing system 10 collects, processes and supplies the audio-visual contents on a display device in the equipment of a final user.

The system 10 for managing audio-visual contents advantageously comprises at least a first device 11 and a second device 12, interconnected through a wireless network.

In particular, the first device or router 11 provides for the supply of all the functions which are required to transfer the audio-visual contents from the digital network directly in the final user peripheral equipment which is equipped with the system 10 for managing audio-visual contents according to the invention.

The router 11 provides then the support for the communications between the peripheral equipment and the external data network(s) 13 to which this peripheral equipment can be connected.

The router 11 is also connected, for example through a wireless network 14, to the second device or player 12, which implement all the functions required for displaying the selected audio-visual contents.

In the example shown in Figure 1, the player 12 is connected to a television set 15 wherein the selected audio-visual contents are displayed. It is also possible to consider the case of a peripheral equipment equipped with a plurality of television sets, each being equipped with a player 12.

Advantageously according to the invention, the player 12 is also equipped with an access device, for example through an infrared control, allowing the user to access all the options for the display of audio-visual contents by the player 12.

The structure of the devices included in the system 10 for managing audio-visual contents according to the invention will be now examined in greater detail.

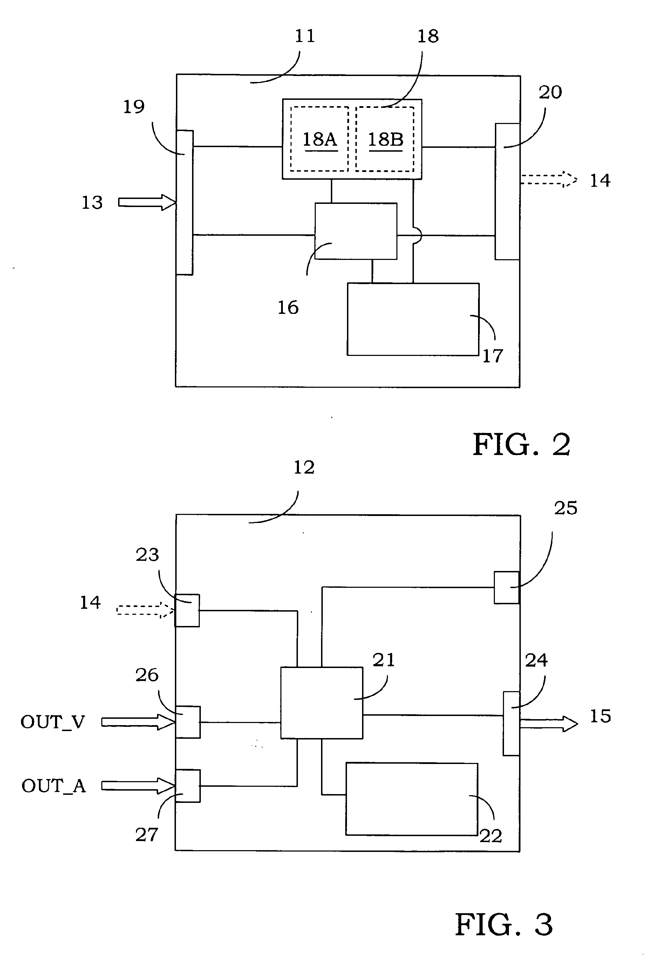

With reference to Figure 2, the router 11 comprises essentially a central processing unit 16, a central memory 17 and a mass memory 18. It interacts, through an input section 19, with external data networks 13 and, through an output section 20, to the wireless network 14 to dialogue with the player(s) 12 to which it must send the selected audio-visual contents.

The connection to the wireless network 14 is made for example through suitable RF transmitting antennas.

In particular, the central processing unit 16 manages the connections between the central memory 17 and the mass memory 18, as well as the connections to the external data networks 13 through the input section 19 and to the wireless network 14 through the output section 20.

Moreover, the programs for the router 11 operation and for the connection of the mass memory 18 to the external data networks 13 and to the wireless network 14 are resident in the central memory 17.

It is actually possible to consider the connection of the router 11 to terrestrial broadband networks, telephone-connected terrestrial networks, satellite networks and wireless networks.

Advantageously according to the invention, the mass memory 18 of the router 11 provides a storage means being wide enough to store the audio-visual contents required by the user which should arrive discontinuously, in order to send them, with the required quality, to the player 12. In other words, the mass memory 18 of the router 11 plays the functions of a buffer, like the so-called computer cache memories.

In such a way, the external data networks 13 connected to the router 11 are not required a transmission capacity being high enough and time-granted to ensure the quality in displaying audio-visual contents to be sent in real time to a display device with the final user, like a television set 15.

Advantageously according to the invention, the audio-visual contents sent by the external data networks 13 to the router 11 can also arrive with an insufficient quality to be immediately provided on the television set 15.

In particular, the mass memory 18 of the router 11 provides for the storage of all the audio-visual contents which are sent to the player 12 according to suitable update logics. Advantageously according to the invention, these update logics are not driven directly by the users, but they are processed starting from their preferences in order to maximize the probability that, when the user asks for a particular audio-visual content, the latter is already in the mass memory 18 of the router 11 thereof. In essence, the so-called pushing of audio-visual contents in the router network is performed.

For example, in case of a user indicating the preference to receive the evening television news, the content of the mass memory 18 of the router 11 thereof is updated with the daily news, anticipating the user requests.

In a preferred embodiment, the router 11 comprises a mass memory 18 suitable to ensure the storage of hundreds of continuous television programming hours. This mass memory 18 is suitably split into two parts, according to criteria linked to the speed of the external networks 13 to which the router 11 is connected.

In particular, a first part, or local memory 18A, is used exclusively by the router 11 and the players 12 connected thereto though the wireless network 14. This local memory 18A is used exclusively by each final user to keep particular audio-visual contents promptly available for viewing.

The audio-visual contents already included in the local memory 18A are therefore the only contents which are immediately available for viewing through all the local players 12, i.e. connected through the wireless network 14.

A second part, or shared memory 18B, is shared with other routers 11 which can be reached through the external data networks 13 to which the router 11 is connected, according to a so-called peer-to-peer sharing pattern, i.e. a joint sharing pattern in which each router 11, or node of the peer-to-peer network, serves both as client and as server.

The shared memory 18B is used to store audio-visual contents which can be reached by the final users. These audio-visual contents are not however repeated on all the shared memories of the routers connected to the network, but only on such a number ensuring that these audio-visual contents can be reached and that they are transferred at a right speed.

In particular, the audio-visual contents stored in the shared memory 18B are repeated in order to:
- increase the probability that at least a physical location can be effectively reached at any time, even when a certain number of routers is off or anyway not accessible by the network it is connected thereto;
- split the transfer processes of the audio-visual contents existing in shared memories 18B of several routers 11 to the local memory 18A of one or more routers 11 being different from the previous routers drawing the audio-visual contents simultaneously from as many routers 11 as possible which contain them and which can be reached at a particular time, in order to reduce the output traffic on the corresponding external data networks 13 of the routers sending the selected audio-visual content to the router 11 demanding it.

It should be noted that the peer-to-peer sharing pattern above-described for the sharing memories 18B of the routers 11, unless of a multiplicative constant related to the number of copies done for each audio-visual content, allows a linear increase of the storage area being available to all the routers 11, with the increase of the number of the routers 11 installed and operating.

Advantageously according to the invention, it is provided that the audio-visual contents kept in the local memories 18A of the routers 11 are continuously updated and modified, with a time schedule depending on the speed, even variable in time, of the external data networks 13 to which the routers 11 are connected. It is also provided that the updating politics take into consideration the user wishes, the information provided by the audio₋visual content suppliers, the actual distribution of the audio-visual contents in reference on the different external data networks 13 and on the different routers 11 installed with the other final users.

Only when a selected audio-visual content is available in the local memory 18A of the router 11 installed with the final user, then that audio-visual content is usable by the final user through one or more player 12 connected to one or more display devices, in particular television sets 15.

Advantageously according to the invention, the update politics are adjusted in order to foresee the final user's demands.

For example, preference is given to the update of audio-visual contents having more recent information, entertainment programs preferred by the user on his specific indications, advertisements selected according to geographic areas or to the interest for the user.

Also the player 12 comprises essentially a central processing unit 21 and a central memory 22. It has also an interface 23 for connection to the wireless network 14, as well as a video output section 24 connected to an audio-visual content display device, in particular a traditional television set 15.

In particular, the interface 23 comprises essentially a radiofrequency-transmitting antenna.

Advantageously according to the invention, the player 12 has not one's own mass memory, but it exploits directly the mass memory 18 of the router 11 whereto it is connected.

The player 12 comprises also a control gate 25, for example an infrared gate, for interacting with an infrared remote control or eventually a wireless keyboard. It also comprises at least a digital input gate 26 and an analogue input gate 27 suitable to receive respectively external OUT_V video signals and OUT_A audio signals.

In particular, the central processing unit 21 manages the input and output connections, particularly to the display device, for example the television set 15 through the video output section 24 and an infrared remote control or keyboard through the control gate 25.

Moreover, the central processing unit 21 manages the connections to the outside through input gates 26 and 27.

Similarly to what has been considered for the router 11, the programs for the player 12 operation and for the connection of the mass memory 23 to the wireless 14 and to the television set 15 are resident in the central memory 22. In particular, these programs supervise the collection and processing of the audio-visual contents received, as well as their transmission for a correct display on the television set.

Essentially, the player 12 provides for the audio-visual contents and the configuration menus to be displayed directly on the screen of the television set 15, drawing all the necessary data from the central memory 17 and the mass memory 18 of the router 11 whereto it is connected. If the player 12 is used to store new contents, it provides to transfer immediately all the data in the router 11 memory.

It should be noted that the physical split of the system 10 for managing audio-visual contents in a router device 11 and in a player device 12 allows the following advantages to be achieved:
a. It eliminates the cable costs in the apartment to connect a single on-demand video device both to the external communication network and to the television set whereon the signal video are to be received.
   In particular, this cost is no more necessary even when the system 10 and the router 11 and player 12 devices are temporarily moved in a different room (for example, during a journey or summer holidays).
   On the contrary, in traditional systems, the cable step of the single equipment is always necessary since the suppliers of communication and telephone systems neither take their terminal connections in the customer's house not necessarily near the television set, nor repeat these connections for each television set in the house.
b. It allows to view several audio-visual contents, simultaneously on different television sets, simply installing several player devices 12, all communicating with the same router 11, wherefrom they receive the video signals without need to repeat the connection to the external data network 13.

This kind of solution allows several television programs to be displayed both on the same television set and on a maximum of twenty different television sets per apartment, which is impossible for the solutions actually sold on the market.

Advantageously according to the invention, the communication between the router 11 and the player 12 occurs throughout the internal wireless network 14, which is not submitted to the traffic of external data, and is then sufficient to ensure the required quality for an adequate viewing of the television content.

The eventual viewing of more audio-visual contents on one or more television sets 15 will involve only the use of the internal wireless network 14, without charging the connecting network between the router 11 and the external data networks 13.

The capacity of viewing several audio-visual contents a time is thus a fundamental characteristic which distinguishes of the system 10 for managing audio-visual contents according to the invention with respect to the products presently available on the market.

Moreover, it should be underlined that, to be able to supply similar services, the products actually sold on the market should be connected only to broadband networks granting the quality of the signal transmitted, which are presently available in very few and limited geographic areas. This is one of the reasons why this kind of services is not up to now diffused on large scale, the construction of these broadband networks requiring huge investments.

In a preferred embodiment of the invention, centralized services are also provided, which are suitable for supporting some specific functions available to the final users of the system 10 for managing audio-visual contents.

It is possible for example to provide a system for managing the charges of the amounts corresponding to the audio-visual content viewing and the credit deriving from the use of credit cards or prepaid cards.

It is also possible to provide a centralized managing of the information useful for invoicing, controlling access rights to contents, the preferences of the final users, configuring the different players installed.

In a preferred embodiment of the invention, the system 10 for managing the audio-visual contents provides a load by the final user of the audio-visual contents in the shared memories 18B distributed on all the routers 11 of the network to which the final user is connected.

In particular, the player 12 provides to load its content in the shared memory 18B of the corresponding router 11. Then, on the basis of the indications provided by the audio-visual content proprietor concerning his will to diffuse it in particular geographic areas or in areas of interest for the final users, the router 11 provides to diffuse it on the highest number of peripheral routers, taking into consideration all the parameters introduced.

Virtually, therefore, anybody possessing a system 10 for managing audio-visual contents according to the invention can become a potential audio-visual content supplier. The speed at which he will be able to introduce his contents in the peer-to-peer network of all the router/player systems will depend on the speed of the network to which all the routers are connected.

Having fiber optics networks with so-called content delivery systems offered by telephone companies, it is already possible to offer contents live on several router/player systems.

The way in which audio-visual contents are diffused in the systems 10 for managing audio-visual contents according to the invention will now be examined.

The index of the new audio-visual contents stored in the shared memories 18B of the routers 11 is recorded in central servers, the only for this technology, implementing the activities of license and invoice control as well as of content diffusion, on the basis of statistical and configuration information, supplied from time to time by the final users, based on their preferences or their will to display particular contents.

It should be specified that the routers 11 are those in charge of supervising the diffusion of the new audio-visual contents introduced in one or more routers.

The final user selects the audio-visual contents he wants to display and he specifies the way in which he want to pay possible fee-paying contents, for example through charging on his account or through credit card.

If the selected audio-visual content is already resident in the local memory 18A of the router 11 of the system 10 for managing audio-visual contents installed at the final user's house, it is immediately available to the final user.

Alternatively, if that audio-visual content is in the memory 18B shared between the different routers connected to the router 11 of the system 10 for managing audio-visual contents installed in the final user's house, the final user is informed about a possible delay which might occur before the use, depending on the speed at which the router 11 succeeds in drawing on the peer-to-peer network the required audio-visual content.

It should be noted that, differently from a traditional centralized approach, wherein the audio-visual contents are all kept in central servers to which the customers access for viewing a television content, the system 10 for managing audio-visual contents according to the invention advantageously distributes the audio-visual contents directly on the different peripheral memories of the systems installed with the final users who subscribed to the service.

The most evident advantages of this audio-visual content distributed approach are the following:
1. The system 10 for managing audio-visual contents allows a huge scaling power (i.e. a capacity of growing) both in terms of number of available hours, and in terms of highest number of users simultaneously connected to a single system.
In particular, the following table I shows a qualitative comparison between the system 10 for managing audio-visual contents according to the invention and the traditional solutions.

**Table I**

| | **Number of available hours** | **Highest number of users connected** |
|---|---|---|
| Known centralized system | It depends on the server capacity | It depends on the server computing power |
| Proposed distributed system | It increases as the number of users connected increases | Unlimited |

2. The system 10 for managing audio-visual contents according to the invention allows the peripheral residual band to be optimized. In particular, the audio-visual content distribution in the internal shared memories 18B of the single routers 11 installed with the final users allows an improved exploitation of the transmissive band available to the telecommunication companies with respect to a traditional centralized solution since the single audio-visual contents from time to time required by the final user will not have to be drawn from the central servers but they will be already resident in the mass memory 18 of each router 11, or directly with the final user asking for it, or, less probable, in one of the routers installed near the user, and, still less probable, in routers still farther from the final user.

The access mode to the audio-visual contents for the final users will now be described in greater detail.

The player 12 installed in one or more television sets 15 of each final user allows the access to audio-visual contents which can be reached directly or through the peer-to-peer network by the router 11 essentially in two ways:
1. Surfing in a menu allowing to make precise researches on the available audio-visual contents according to different keys (i.e. title, author, interpreters, genre, etc);
2. Defining personalized TV programs, i.e. a sequence of television contents characterized by genre or other parameters, which will be sent in sequence to the final user, just like a traditional television channel, without need to select from time to time the content he wants to view.

It should be noted that the definition of personalized TV programs is in any case different from the traditional television program since in the system 10 according to the invention the audio-visual contents have been anyway selected in advance by the final user (setting his preferences), concerning both the contents and the costs and payment forms.

The above-described system 10 for managing audio-visual contents allows therefore a new method for managing audio-visual contents to be implemented.

In particular, the method for managing audio-visual contents according to the invention comprises the following steps:
- realizing a peer-to-peer network of a plurality of router devices suitable for connection to external data networks and comprising audio-visual content storage means;
- providing at least one shared section of the audio-visual content storage means;
- sharing the shared sections of the audio-visual content storage means of the router devices; and
- distributing audio-visual contents in the storage means of the plurality of router devices.

Advantageously according to the invention, the method for managing audio-visual contents provides also the following steps:
- selecting an audio-visual content by a final user;
- collecting the selected audio-visual content from the plurality of storage means through the peer-to-peer network;
- storing the selected audio-visual content in at least one local section of the audio-visual content storage means of the final user router;
- providing a plurality of player devices connected to corresponding router devices as well as to a final user display device;
- displaying the selected audio-visual content comprised in the local section of the audio-visual content storage means through the final user player device.

In essence, the method for managing audio-visual contents according to the invention distributes the audio-visual contents directly in the distributed sections of the storage means of the router devices of the final users which subscribed to the service, it collects the audio-visual content selected by a final user through the peer-to-peer network and store it in the local section of the store devices of the final user router device and it allows the display thereof through the player device and a display device, for example a television set.

Advantageously according to the invention, the method for managing audio-visual contents provides also a step of updating the audio-visual contents comprised in the router devices of the peer-to-peer network of the users who subscribed to the service.

In particular, this step of updating the audio-visual content occurs with a time schedule depending on the speed of the external data networks to which the router devices are connected.

Advantageously according to the invention, it is provided that this update step is managed on the basis of the user wishes, the information provided by the audio-visual content suppliers, the actual distribution of the audio-visual contents in reference on the different external data networks and on the different router devices installed with other final users.

Moreover, advantageously according to the invention, the update step is adjusted in order to foresee the final user demands. In particular, the update take into consideration the specifications supplied by the user. For example, in case of interest for the news, it is more probable that he wants to see today's news rather than yesterday's news.

Moreover, the update implements an historical evaluation of the user preferences and detects his specific indications. For example, if a user specifies to prefer football, audio-visual contents linked to football, rather than to sailing, are preferably sent.

Advantageously according to the invention, the step of collecting the selected audio-visual content from the plurality of storage means through the peer-to-peer network provides a split of the transfer process of the audio-visual contents stored in shared sections of several router devices to the local section of one or more router devices being different from the previous routers drawing the audio-visual contents simultaneously from as many router devices as possible which contain them and which can be reached at a particular time, in order to reduce the output traffic on the corresponding external data networks.

Finally, the method for managing audio-visual contents according to the invention allows a load by the final user of the audio-visual contents in the shared sections distributed on all the routers of the network to which the final user is connected and the distribution thereof in the network by the router device on the basis of the indications provided by the audio-visual content proprietor concerning his will to diffuse it in particular geographic areas or in areas of interest for the final users.

In conclusion, the system and the method for managing audio-visual contents according to the invention can supply television contents with configurable quality and anyway higher than the present traditional television quality in the on-demand mode, selected by the final user.

The main advantages of the proposed solution are as follows:
1. The proposed system and method do not require the use of broadband networks for which the signal quality must be granted. For this reason, it is sometimes possible to use also satellite networks or not-broadband networks.
2. The proposed system and method optimize the exploitation of the broadband networks installed according to a star pattern, exploiting in a better way the peripheral residual bank which is not used and not introducing singularity points on the network. In fact they do not require centralized servers for storing audio-visual contents, thus reducing considerably the costs for developing this technology.
3. The proposed system and method are really scalable, in terms both of highest number of users simultaneously connected and of highest number of hours available through the devices installed directly with the final users. This is allowed by introducing a distributed content pattern with respect to the present centralized pattern used in all the other available solutions.

## Claims

1. Method for managing audio-visual contents **characterized in that** it comprises the steps of:
- realizing a peer-to-peer network of a plurality of router devices suitable for connection to external data networks and comprising audio-visual content storage means;
- providing a plurality of player devices connected to corresponding router devices, as well as to a display device of said final user;
- providing at least one shared section of said audio-visual content storage means;
- sharing said shared sections of said audio-visual content storage means of said router devices; and
- distributing audio-visual contents on said storage means of said plurality of router devices.

2. Method for managing audio-visual contents according to claim 1, **characterized in that** it also comprises the steps of:
- selecting an audio-visual content by a final user;
- collecting said selected audio-visual content from said plurality of storage means through said peer-to-peer network; and
- storing said selected audio-visual content in at least one local section of said audio-visual content storage means of said final user router device.

3. Method for managing audio-visual contents according to claim 2, **characterized in that** it also comprises, upon receipt of a selection of an audio-visual content by said final user, a step of verifying if said selected audio-visual content is resident in said local section of said audio-visual content storage means of said final user router device.

4. Method for managing audio-visual contents according to claim 3, **characterized in that** it comprises, in case said verifying step has a positive result, a step of displaying said selected audio-visual content through said player device on said final user display device.

5. Method for managing audio-visual contents according to claim 2, **characterized in that** it also comprises a step of updating said audio-visual contents comprised in said router devices of said peer-to-peer network of users who subscribed to the service.

6. Method for managing audio-visual contents according to claim 5, **characterized in that** said step of updating audio-visual contents occurs with a time schedule depending on the speed of said external data networks.

7. Method for managing audio-visual contents according to claim 5, **characterized in that** said step of updating audio-visual contents is managed on the basis of parameters set by said final user and/or by suppliers of said audio-visual contents.

8. Method for managing audio-visual contents according to claim 5, **characterized in that** said step of updating audio-visual contents is managed on the basis of the actual distribution of said audio-visual contents in said external data networks and in said plurality of router devices installed with other final users.

9. Method for managing audio-visual contents according to claim 5, **characterized in that** said step of updating audio-visual contents is adjusted in order to foresee the demands of said final user, taking into consideration the previous demands and the preferences of said user.

10. Method for managing audio-visual contents according to claim 1, **characterized in that** said step of collecting said audio-visual content selected from said plurality of storage means through said peer-to-peer network provides that the transfer processes of said audio-visual contents existing in shared memories of several router devices to the local sections of one or more router devices being different from said previous devices drawing said audio-visual contents are split, simultaneously from as many router devices as possible which contain them and which can be reached at a particular time.

11. Method for managing audio-visual contents according to claim 1, **characterized in that** it also comprises a step of accessing to said audio-visual contents by said final user according to at least a first and a second access mode.

12. Method for managing audio-visual contents according to claim 11, **characterized in that** said first access mode provides a surfing in a menu to make precise researches on said available audio-visual contents according to different keys.

13. Method for managing audio-visual contents according to claim 11, **characterized in that** said second access mode provides a definition of personalized TV programs, to be sent in sequence to said final user.

14. Method for managing audio-visual contents according to claim 1, **characterized in that** it also comprises a step of loading by said final user of audio-visual contents in shared sections distributed in all the routers of said peer-to-peer network and of distribution of said audio-visual content by said router device on the basis of indications provided by said final user who possesses said audio-visual content.

15. System for managing audio-visual contents **characterized in that** it comprises at least a first router device (11) connected to a digital network (13) for transmitting audio-visual content as well as to a second player device (12) connected in turn to at least a device (15) for displaying audio-visual contents installed with a final user, said system comprising means for storing audio-visual contents shared in said first router devices (11) of a plurality of final users who subscribed to the service, interconnected through a peer-to-peer network.

16. System for managing audio-visual contents according to claim 15, **characterized in that** said first router device (11) and said second player device (12) are interconnected through a wireless network (14).

17. System for managing audio-visual contents according to claim 15, **characterized in that** said first router device (11) comprises a central processing unit (16) connected to a central memory (17) and to a mass memory (18), as well as, through an input section (19), to said at least one external data network (13) and, through an output section (20), to said second player device (12).

18. System for managing audio-visual contents according to claim 17, **characterized in that** said output section (20) realizes a wireless connection to said second player device (12).

19. System for managing audio-visual contents according to claim 16, **characterized in that** said mass memory (18) supplies a storage support being wide enough to store audio-visual contents requested by said final user.

20. System for managing audio-visual contents according to claim 16, **characterized in that** said mass memory (18) comprises at least a section (18B) which is shared with other router devices which can be reached through the peer-to-peer network.

21. System for managing audio-visual contents according to claim 20, **characterized in that** said mass memory (18) also comprises at least a local section (18A), used exclusively by said first router device (11) and by said at least one player device (12) connected thereto to keep some particular audio-visual contents promptly available for viewing.

22. System for managing audio-visual contents according to claim 15, **characterized in that** said second player device (12) comprises a central processing unit (21) connected to a central memory (22), as well as, through a video output section (24), to said device (15) for displaying audio-visual contents installed with said final user.

23. System for managing audio-visual contents according to claim 22, **characterized in that** said second player device (12) also comprises an interface (23) suitable to connect to said first router device (11).

24. System for managing audio-visual contents according to claim 22, **characterized in that** said second player device (12) also comprises at least one digital input gate (26) and one analogue input gate (27) suitable to draw respective input signals (OUT_V, OUT_A) .

25. System for managing audio-visual contents according to claim 22, **characterized in that** said second player device (12) also comprises a control gate (25) suitable to connect to a remote control or to a wireless keyboard.

26. System for managing audio-visual contents according to claim 23, **characterized in that** said interface (23) provides for a wireless connection to said first router device (11).

27. System for managing audio-visual contents according to claim 15, **characterized in that** said second player device (12) is equipped with a device for accessing options for the display of audio-visual contents by said final user.

28. System for managing audio-visual contents according to claim 25, **characterized in that** said control gate (25) comprises means for implementing an infrared connection to said remote control or wireless keyboard.

29. System for managing audio-visual contents according to claim 15, **characterized in that** said at least one external data network (13) is selected among broadband terrestrial networks, telephone-connected terrestrial networks, satellite networks and wireless networks.

30. System for managing audio-visual contents according to claim 20, **characterized in that** said peer-to-peer network provides for a split of the transfer processes of said audio-visual contents existing in said shared sections (18B) of several router devices to said local section (18A) of one or more router devices being different from the previous routers drawing said audio-visual contents simultaneously from as many router devices as possible which contain them and which can be reached at a particular time through the peer-to-peer network.

31. System for managing audio-visual contents according to claim 20, **characterized in that** it provides an update of audio-visual contents kept in said local sections (18A) and in said shared sections (18B) of router devices connected to said peer-to-peer network.

32. System for managing audio-visual contents according to claim 31, **characterized in that** said update is performed on the basis of said final user wishes or information provided by the suppliers of said audio-visual contents.

33. System for managing audio-visual contents according to claim 31, **characterized in that** said update is performed on the basis of the actual distribution of said audio-visual contents in said at least one external data network (13) and in said router devices installed with other final users.

34. System for managing audio-visual contents according to claim 31, **characterized in that** said update is adjusted in order to foresee said final user requests, taking into consideration the previous requests and said preferences.

35. System for managing audio-visual contents according to claim 15, **characterized in that** said first router device (11) manages centralized remote services suitable to support some specific functions available to said final users.
